# EUROPÄISCHE PATENTSCHRIFT

(11) **EP 3 124 379 B1**
(45) Veröffentlichungstag und Bekanntmachung des Hinweises auf die Patenterteilung: **01.05.2019**
(21) Anmeldenummer: 15178886.6
(22) Anmeldetag: 29.07.2015
(51) Int. Cl.: B64C 29/00

(54) **HYBRID-ELEKTRISCHER ANTRIEBSSTRANG FÜR VTOL DROHNEN**
HYBRID-ELECTRIC DRIVE TRAIN FOR VTOL DRONES
CHAINE CINEMATIQUE HYBRIDE-ELECTRIQUE POUR DRONES VTOL

(43) Veröffentlichungstag der Anmeldung: 01.02.2017
(73) Patentinhaber: Airbus Defence and Space GmbH, 85521 Ottobrunn (DE)
(72) Erfinder: STEINWANDEL, Jürgen, 88690 Uhldingen-Mühlhofen (DE); WANG, Ning, 80809 München (DE); JUDAS, Michael, 80331 München (DE); VAN TOOR, Jan, 81739 München (DE)
(74) Vertreter: LKGLOBAL Lorenz & Kopf PartG mbB Patentanwälte

(56) Entgegenhaltungen:
- EP-A2- 2 011 962
- WO-A1-2015/028627
- DE-A1-102005 040 887
- DE-A1-102009 048 201
- DE-A1-102012 021 339

## Beschreibung

### Gebiet der Erfindung

Die Erfindung betrifft Antriebssysteme für senkrechtstartfähige Fluggeräte. Insbesondere betrifft die Erfindung ein senkrechtstartfähiges Fluggerät.

### Hintergrund der Erfindung

Senkrechtstartfähige Fluggeräte, insbesondere Drohnen, haben vorteilhafte Eigenschaften hinsichtlich ihrer anzusteuernden Ziele. Dabei ist es von großer Bedeutung, dass senkrechtstartfähige Fluggeräte bzw. Drohnen keine Start- oder Landebahn benötigen, da sie senkrecht vom Erdboden abheben bzw. landen können. Ferner ist es mit solchen senkrechtstartfähigen Fluggeräten möglich, ein Schweben über einem bestimmten Ziel, welches auch als Hovering bezeichnet wird, durchzuführen, um somit beispielsweise Beobachtungsmissionen durchführen zu können. Dabei können die senkrechtstartfähigen Fluggeräte mehrere Minuten, aber auch Stunden, über ein und demselben Ziel schweben, um somit während der Beobachtungsmission bestimmte Objekte am Erdboden erfassen zu können. Ein senkrechtstartfähiges Fluggerät ist beispielsweise ein Hubschrauber. Ein Hubschrauber ist jedoch bei längeren Streckenflügen infolge fehlender Tragflächen hinsichtlich Auftrieb wenig effizient.

WO 2015/028627 beschreibt ein Fluggerät, welches sowohl senkrecht starten und landen, sowie schweben als auch mit hoher Reisefluggeschwindigkeit horizontal fliegen kann. Das Fluggerät weist eine Tragestruktur, eine Flügelstruktur, mindestens drei, vorzugsweise mindestens vier Hubrotoren und wenigstens einen Schubantrieb auf.

DE 10 2012 021339 A1 beschreibt ein unbemanntes Luftfahrzeug, dessen Antrieb einen als Diesel- und/oder Kerosinmotor ausgebildeten Verbrennungsmotor mit Ladereinrichtung zur Motoraufladung umfasst.

EP 2 011 962 A2 beschreibt einen Rotationsmotor für einen Zusammensetzungszyklus, um einen niedrigen spezifischen Spritverbrauch bei hohem Leistung/Gewicht - Verhältnis zu ermöglichen. Der Motor eignet sich insbesondere für Antriebssysteme.

### Zusammenfassung der Erfindung

Es ist eine Aufgabe der Erfindung, den Antrieb eines senkrechtstartfähigen Fluggeräts zu verbessern.

Diese Aufgabe wird durch den Gegenstand des unabhängigen Anspruchs gelöst. Beispielhafte Ausführungsformen ergeben sich aus den abhängigen Ansprüchen und der nachfolgenden Beschreibung.

Gemäß einem Aspekt der Erfindung ist ein senkrechtstartfähiges Fluggerät angegeben. Das senkrechtstartfähige Fluggerät weist einen Hubantrieb zum Erzeugen einer in eine Vertikalrichtung wirkenden Auftriebskraft sowie einen Schubantrieb zum Erzeugen einer in eine Horizontalrichtung wirkenden Antriebskraft auf. Ferner weist das senkrechtstartfähige Fluggerät einen Motor zum Bereitstellen von mechanischer Energie für den Schubantrieb sowie einen ersten Generator zum Bereitstellen von elektrischer Energie für den Hubantrieb auf. Außerdem umfasst das senkrechtstartfähige Fluggerät einen Abgasturbolader für den Motor mit einer von einem Abgasstrom des Motors angetriebenen ersten Turbine, die dazu ausgeführt ist, mechanische Energie für den Schubantrieb bereitzustellen Das Fluggerät weist weiterhin eine zweite Turbine zum Bereitstellen mechanischer Energie für einen dritten Generator auf, wobei der dritte Generator dazu ausgeführt ist, elektrische Energie für den Hubantrieb bereitzustellen. Ein Antrieb der zweiten Turbine erfolgt durch den Abgasstrom des Motors. Das Fluggerät weist weiter eine Verteilereinheit auf, welche ausgeführt ist, ein Aufteilen des Abgasstroms des Motors in einen der ersten Turbine zuzuführenden ersten Abgasanteil und einen der zweiten Turbine zuzuführenden zweiten Abgasanteil so zu steuern, dass ein Verhältnis zwischen dem ersten Abgasanteil und dem zweiten Abgasanteil vorgegeben oder eingestellt wird.

Mit anderen Worten ist ein hybrid-elektrischer Antriebsstrang bzw. ein hybrid-elektrisches Antriebssystem für VTOL (Vertical Take Off and Landing) Drohnen mit mindestens zwei Hubrotoren und einem Heckpropeller angegeben. Der Antriebsstrang enthält eine Verbrennungsmaschine vorzugsweise mit Diesel und oder Kerosin als Kraftstoff. Es können somit Kolbenmotoren, insbesondere Hubkolbenmotoren, oder Gasturbinen als Motor vorgesehen sein. Vorzugsweise weist das Fluggerät, das heißt die Drohne, einen hybrid-elektrischen Antrieb mit elektrischem Antrieb von vier Hubrotoren sowie einem mechanisch betriebenen Heckpropeller für den Streckenflug auf.

Mit einem solchen senkrechtstartfähigen Fluggerät, welches beispielsweise eine Drohne sein kann, ergibt sich der Vorteil, dass durch die Kombination eines mechanischen Direktantriebs mit elektrisch betriebenen Hubrotoren eine effiziente Verteilung der Antriebsleistung und damit ein energieeffizientes Fliegen realisiert werden kann. Insbesondere ist es bei einer Verwendung von Batterien im Antriebsstrang möglich, eine zielgerichtete Abstimmung zu installierender Batteriemasse und dem Tankvolumen des Diesel- bzw. Kerosinkraftstoffes vorzunehmen. Ferner ist es möglich, die für die Hubrotoren zur Verfügung gestellte elektrische Energie auf die für den Schubantrieb zur Verfügung gestellte mechanische Energie abzustimmen. Diese Abstimmung bzw.

Einstellung erfolgt durch eine Steuerungseinheit.

Es ist auch möglich, gewisse Phasen eines Missionsprofils, das heißt während dem Flug, ohne den Betrieb des Motors durchzuführen, so dass eine Infrarot- und Schallsignatur minimiert werden kann. Mit anderen Worten bedeutet dies, dass erwärmte Abgase während des Flugs verringert werden, indem die erforderliche Auftriebskraft durch die Hubrotoren bereitgestellt wird und weniger durch den Schubantrieb, welcher durch den Motor angetrieben wird.

Der Motor ist eine Verbrennungskraftmaschine. Insbesondere ist der Motor ausgewählt aus der Gruppe bestehend aus einem Kolbenmotor, einer Gasturbine oder einer Brennstoffzelle. Die Gasturbine ist zum Beispiel eine Mikro-Gasturbine.

Der Motor kann dem Schubantrieb beispielsweise über eine Welle mechanische Energie zur Verfügung stellen. Auf dieser Welle kann ein Generator angeordnet sein, der die mechanische Energie, die vom Motor für den Schubantrieb bereitgestellt wird, zumindest teilweise in elektrische Energie umwandelt und diese umgewandelte elektrische Energie den Hubrotoren zur Verfügung stellt. Die erste Turbine des Abgasturboladers kann beispielsweise auf einer weiteren Welle, welche im Folgenden auch als zweite Welle bezeichnet wird, vorgesehen sein, um zusätzlich mechanische Energie für den Schubantrieb bereitzustellen. Auch auf dieser weiteren Welle kann ein Generator vorgesehen sein, welcher ebenfalls die von der Turbine für den Schubantrieb bereitgestellte mechanische Energie zumindest teilweise in elektrische Energie umwandelt, so dass diese elektrische Energie an die Hubrotoren, insbesondere an Elektromotoren für die Hubrotoren, übertragen wird. Somit können zwei Wellen parallel zueinander vorgesehen sein, welche beispielsweise über ein Getriebe miteinander gekoppelt sind.

Der Hubantrieb weist beispielsweise einen Propeller, insbesondere einen Hubpropeller, auf. Der Schubantrieb weist beispielsweise ebenfalls einen Propeller auf.

Die Turbine des Abgasturboladers nutzt einen Abgasstrom aus dem Motor, um somit eine Drehbewegung auszuführen, so dass die Entspannungsenergie des Abgases in der Turbine letztendlich in Form von mechanischer Energie auf die Welle übertragen wird, um somit mechanische Energie für den Schubantrieb bereitzustellen. Der Abgasstrom wird dabei beispielsweise über eine separate Leitung von dem Motor hin zur Turbine geführt. Der Abgasstrom weist ein Abgas auf, welches aufgrund eines Verbrennungsprozesses innerhalb des Motors entsteht.

Das senkrechtstartfähige Fluggerät kann zudem einen Rumpf aufweisen, wobei an dem Rumpf abragende Tragflächen angebracht sind. Insbesondere sind zwei Paare von hintereinander angeordneten aus dem Rumpf herausragenden Tragflächen angeordnet. An diesen Tragflächen können wiederum die Hubrotoren des Hubantriebs angebracht sein. Der Schubantrieb kann beispielsweise direkt am Rumpf des senkrechtstartfähigen Fluggeräts angebracht sein. Es sind vorzugsweise zumindest zwei Hubrotoren an dem senkrechtstartfähigen Fluggerät vorgesehen. Es ist jedoch auch möglich, dass drei und insbesondere vier Hubrotoren an dem senkrechtstartfähigen Fluggerät vorgesehen sind. Dabei ist es möglich, dass an jeder der Tragflächen der Paare von Tragflächen ein Hubrotor angebracht ist. Diese Hubrotoren sind dabei beispielsweise an äußeren Enden der jeweiligen Tragflächen angebracht.

Die Vertikalrichtung beschreibt beispielsweise eine Richtung, welche senkrecht zur Erdoberfläche ausgerichtet ist. Die Horizontalrichtung ist beispielsweise eine Richtung, welche parallel zur Erdoberfläche ausgerichtet ist und beschreibt diejenige Richtung, in welche sich das senkrechtstartfähige Fluggerät im Wesentlichen während eines Horizontalfluges bewegt.

Gemäß einer Ausführungsform der Erfindung ist der erste Generator dazu ausgeführt, die elektrische Energie für den Hubantrieb unter Verwendung zumindest eines Teils der von der ersten Turbine bereitgestellten mechanischen Energie bereitzustellen.

Dies ermöglicht es, elektrische Energie, beispielsweise für eine Bewegung des senkrechtstartfähigen Fluggeräts in Vertikalrichtung, bereitzustellen. Dabei wird insbesondere bei der Bewegung in Vertikalrichtung, das heißt beim Senkrechtstarten oder beim Landen hauptsächlich der Hubantrieb verwendet. Der Schubantrieb hingegen kommt hauptsächlich während des Horizontalfluges zum Einsatz.

Es ist möglich, dass die von der ersten Turbine bereitgestellte mechanische Energie zumindest teilweise durch den ersten Generator in elektrische Energie umgewandelt wird, so dass ein Teil der von der ersten Turbine bereitgestellten mechanischen Energie dem Schubantrieb bereitgestellt werden kann und ein anderer Teil der bereitgestellten mechanischen Energie in elektrische Energie durch den ersten Generator umgewandelt wird. Somit kann die dem Hubantrieb und dem Schubantrieb jeweils zur Verfügung gestellte Energie in Abhängigkeit des Flugzustandes angepasst werden.

Gemäß einer weiteren Ausführungsform der Erfindung weist das senkrechtstartfähige Fluggerät einen zweiten Generator auf, der dazu ausgeführt ist, zumindest einen Anteil der von dem Motor bereitgestellten mechanischen Energie in elektrische Energie umzuwandeln und diese elektrische Energie dem Hubantrieb bereitzustellen.

Mit anderen Worten ist der erste Generator auf derselben Welle angeordnet, auf welcher sich auch die erste Turbine befindet und der zweite Generator ist auf derselben Welle angeordnet, welche durch den Motor angetrieben wird. Diese beiden Wellen können separat, insbesondere auch parallel zueinander, angeordnet sein. Beispielsweise ist sowohl der erste Generator als auch der zweite Generator dazu geeignet, zumindest einen Anteil der von dem Motor und/oder der von der ersten Turbine bereitgestellten mechanischen Energie in elektrische Energie umzuwandeln. Somit kann elektrische Energie, welche dem Hubantrieb bereitgestellt wird, aus zwei unabhängig voneinander arbeitenden Generatoren, nämlich dem ersten Generator und dem zweiten Generator, bezogen werden. Dabei wird eine erste Welle beispielsweise durch den Motor angetrieben und eine zweite Welle wird beispielsweise durch die Turbine angetrieben. Jedenfalls kann auf zumindest einer der beiden Wellen ein Generator angeordnet sein, welcher elektrische Energie unter Verwendung der bereitgestellten Wellenenergie erzeugen kann. Die Wellenenergie ergibt sich dabei aus einer Drehbewegung der Welle.

Gemäß einer weiteren Ausführungsform der Erfindung weist das senkrechtstartfähige Fluggerät ferner ein Getriebe auf, welches dazu ausgeführt ist, die von dem Motor bereitgestellte mechanische Energie und/oder die von der ersten Turbine bereitgestellte mechanische Energie auf den Schubantrieb zu übertragen.

Beispielsweise können die erste Welle und die zweite Welle über das Getriebe miteinander gekoppelt sein, so dass beispielsweise auch ein Übersetzungsverhältnis eingestellt werden kann. Der Schubantrieb kann beispielsweise auf der durch den Motor angetriebenen ersten Welle angeordnet sein, wobei die zweite Welle, welche von der ersten Turbine angetrieben wird, über das Getriebe mit der ersten Welle verbunden bzw. gekoppelt ist.

Zur Unterbringung des Getriebes kann beispielsweise eine Getriebebox in dem Rumpf des senkrechtstartfähigen Fluggeräts angeordnet sein.

Gemäß der Erfindung weist das senkrechtstartfähige Fluggerät eine zweite Turbine zum Bereitstellen mechanischer Energie für einen dritten Generator auf, wobei der dritte Generator dazu ausgeführt ist, elektrische Energie für den Hubantrieb bereitzustellen.

Es kann vorgesehen sein, dass die zweite Turbine eine dritte Welle antreibt, so dass der dritte Generator aus der Wellenenergie der dritten Welle bzw. der Drehbewegung der dritten Welle wiederum elektrische Energie bereitstellt, wobei diese elektrische Energie wiederum dem Hubantrieb bereitgestellt wird. Es kann vorgesehen sein, dass der dritte Generator die von der zweiten Turbine bereitgestellte mechanische Energie vollständig in elektrische Energie umwandelt, um somit die Hubrotoren anzutreiben.

Gemäß der Erfindung erfolgt ein Antrieb der zweiten Turbine durch den Abgasstrom des Motors.

Dieser Abgasstrom kann beispielsweise ein Teil des Abgasstroms sein, welcher bereits die erste Turbine antreibt.

Gemäß der Erfindung weist das senkrechtstartfähige Fluggerät ferner eine Verteilereinheit zum Steuern des Abgasstroms des Motors in einen der ersten Turbine zuzuführenden ersten Abgasanteil und einen der zweiten Turbine zuzuführenden zweiten Abgasanteil auf.

Dabei kann im Bereich eines Austritts des Abgases aus der Verbrennungsmaschine bzw. aus dem Motor eine einstellbare Klappe vorgesehen sein, welche dazu ausgeführt ist, den aus dem Motor austretenden Abgasstrom gezielt der ersten Turbine und/oder der zweiten Turbine zuzuführen. Dabei kann die Menge an zugeführtem Abgas zu der jeweiligen Turbine eingestellt werden. Dies wird in der Figurenbeschreibung noch genauer erläutert werden.

Die Steuerungseinheit ist dazu ausgeführt, den ersten Abgasanteil und den zweiten Abgasanteil einzustellen, um somit die durch die erste Turbine und die durch die zweite Turbine bereitgestellte mechanische Energie anzupassen.

Dies ergibt sich aus dem direkten Zusammenspiel zwischen dem durch die jeweilige Turbine hindurchtretenden Abgasstrom und der dadurch hervorgerufenen Expansionsenergie in der Turbine. Auch auf diese Weise ist es möglich, die dem Schubantrieb bereitgestellte mechanische Energie auf die dem Hubantrieb bereitgestellte elektrische Energie anzupassen. Mit anderen Worten wird es durch die dritte Welle und den dritten Generator ermöglicht, die den Hubrotoren bzw. dem Hubantrieb bereitgestellte elektrische Energie aufgrund eines weiteren von den ersten beiden Wellen separaten Energieumwandlungssystems bereitzustellen.

Gemäß einer weiteren Ausführungsform der Erfindung ist die Steuerungseinheit dazu ausgeführt, einen Anteil der bereitgestellten mechanischen Energie und einen Anteil der bereitgestellten elektrischen Energie in Abhängigkeit eines Flugzustandes anzupassen.

Die Steuerungseinheit, welche auch als Power Electronics bezeichnet wird, kann insbesondere verschiedene Flugregler bzw. eine Steuerungselektronik zur Steuerung des senkrechtstartfähigen Fluggerätes aufweisen. Dabei kann eine Regelung des Antriebssystems basierend auf einem erfassten Flugzustand erfolgen. Der Flugzustand kann dabei durch entsprechende Sensoren ermittelt werden. Insbesondere können durch die Steuerungseinheit Flugdaten ermittelt werden, die es ermöglichen, zu bestimmen, wie groß der dem Schubantrieb zur Verfügung zu stellende Anteil an mechanischer Energie ist. Ebenso kann durch die Steuerungseinheit eine erforderliche elektrische Energie für den Hubantrieb in Abhängigkeit des jeweiligen Flugzustandes bestimmt und eingestellt werden. Dadurch wird es ermöglicht, in verschiedenen Flugzuständen eine optimale Anpassung zwischen bereitgestellter elektrischer Energie und bereitgestellter mechanischer Energie zu erreichen.

Gemäß einer weiteren Ausführungsform der Erfindung weist der Abgasturbolader einen von der ersten Turbine angetriebenen Verdichter auf, der dazu ausgeführt ist, den Arbeitsdruck in dem Motor zu erhöhen.

Der Verdichter ist beispielsweise auf derselben Welle wie die erste Turbine angeordnet. Insbesondere kann der Abgasturbolader auf der zweiten Welle angeordnet sein und verdichtet die dem Motor zugeführte Luft, so dass der Arbeitsdruck im Motor selbst erhöht werden kann. Der Motor ist beispielsweise eine Verbrennungskraftmaschine, wie beispielsweise ein Kolbenmotor etc. Durch den Abgasturbolader kann letztendlich zusätzliche Leistung für den Motor bereitgestellt werden.

Gemäß einer weiteren Ausführungsform der Erfindung weist der Schubantrieb einen Propeller auf. Ferner ist der Schubantrieb dazu ausgeführt, die bereitgestellte mechanische Energie über eine Welle an den Propeller zu übertragen, wobei die Welle zur Übertragung der mechanischen Energie auf den Propeller eine Kupplung aufweist. Diese Welle ist beispielsweise die beschriebene erste Welle.

Die Kupplung ist somit beispielsweise auf der ersten Welle angeordnet. Die erste Welle ist beispielsweise diejenige Welle, welche von der Verbrennungskraftmaschine, das heißt dem Motor selbst, angetrieben wird. Die Kupplung ist beispielsweise zwischen dem Getriebe und dem Propeller angeordnet. Insbesondere kann das System durch die Kupplung in einen Leerlauf geschaltet werden, wobei die erste Welle, das heißt die Antriebswelle, nicht mehr mit dem Propeller verbunden ist. Durch Einkuppeln wird wiederum eine Kraftübertragung von der durch den Motor angetriebenen Welle auf den Propeller bereitgestellt. Über das Getriebe kann ferner mechanische Energie der zweiten Welle auf die erste Welle, das heißt die Antriebswelle, übertragen werden, so dass die mechanische Energie, welche durch die erste Turbine zur Verfügung gestellt wird, und die mechanische Energie, welche durch den Motor selbst zur Verfügung gestellt wird, gekoppelt werden.

Gemäß einer weiteren Ausführungsform der Erfindung weist das senkrechtstartfähige Fluggerät eine Flügelstruktur auf, die dazu ausgeführt ist, bei einer Horizontalbewegung des Fluggerätes eine Auftriebskraft für das Fluggerät zu erzeugen.

Die Horizontalbewegung erfolgt dabei beispielsweise parallel zur Erdoberfläche in die Horizontalrichtung. Die Auftriebskraft wird dabei beispielsweise durch ein Auftrieb erzeugendes Profil der Flügelstruktur bereitgestellt.

Gemäß einer weiteren Ausführungsform der Erfindung weist die Flügelstruktur zwei in Horizontalrichtung hintereinander angeordnete Paare von von einem Rumpf des Fluggerätes abragenden Tragflächen auf.

Beispielsweise weist das senkrechtstartfähige Fluggerät somit eine Tandemflügelstruktur auf. Die jeweils vom Fluggerät abragenden Tragflächen können dabei senkrecht vom Rumpf abragen bzw. aus diesem herausragen.

Gemäß einer weiteren Ausführungsform der Erfindung weist der Hubantrieb zumindest zwei Hubrotoren auf, welche jeweils an einem Ende der Tragflächen angeordnet sind.

Durch diese beiden Hubrotoren wird beispielsweise die erforderliche Auftriebskraft während des vertikalen Aufstiegs, das heißt während des Vertikalfluges des senkrechtstartfähigen Fluggeräts, bereitgestellt. Es können jedoch auch vier Hubrotoren an dem senkrechtstartfähigen Fluggerät angebracht sein, insbesondere an den Enden einer jeden Tragfläche des senkrechtstartfähigen Fluggeräts, so dass optimale Stabilitätseigenschaften während des Vertikalfluges des senkrechtstartfähigen Fluggeräts vorliegen. Insbesondere kann dadurch verhindert werden, dass ein seitliches Abkippen des Fluggeräts auftritt.

Gemäß einer weiteren Ausführungsform der Erfindung weist das senkrechtstartfähige Fluggerät ferner einen wiederaufladbaren Energiespeicher zur Versorgung der Hubrotoren mit elektrischer Energie auf. Dabei ist die Steuerungseinheit dazu ausgeführt, ein Verhältnis der von dem ersten oder dem zweiten oder dem dritten Generator bereitgestellten elektrischen Energie zu der vom Energiespeicher bereitgestellten elektrischen Energie einzustellen.

Somit kann die Bereitstellung von elektrischer Energie auch durch eine mitgeführte Batterie bereitgestellt werden, so dass der Hubantrieb auch betrieben werden kann, wenn die vom Motor bzw. von den Turbinen bereitgestellte mechanische Energie ausschließlich an den Schubantrieb übertragen wird und durch die Generatoren keine elektrische Energie bereitgestellt wird. Das Vorsehen eines Energiespeichers innerhalb des senkrechtstartfähigen Fluggeräts bringt ferner den Vorteil mit sich, dass eine Gewichtsverteilung innerhalb des Fluggeräts effektiv angepasst werden kann. Insbesondere kann durch das Vorsehen des Energiespeichers an verschiedenen Positionen innerhalb des senkrechtstartfähigen Fluggeräts eine bestimmte Gewichtsverteilung eingestellt werden.

Die vorliegende Erfindung sieht die Installation einer Verbrennungsmaschine vor. Als Verbrennungsmaschinen kommen beispielsweise gewichtsreduzierte Dieselmotoren oder Mikro-Gasturbinen in Betracht Entsprechende Dieselmotoren können derart ausgelegt sein, dass sie minimal die Anforderung eines Leistungsgewichts von 0,75 kg/kW erfüllen. In Betracht kommen hier vielstofffähige Rotationskolbenmotoren mit Direkteinspritzung (Common Rail oder Pumpe-Düse), Schichtladungs-Brennverfahren (fremdgezündet), Aufladung und Abgasenergie-Rückgewinnung (Turbo- Compound). Eine Möglichkeit besteht darin, ein in der Figurenbeschreibung noch näher erläutertes zweiflutiges Abgas- bzw. Antriebssystem zu realisieren. Dabei trägt eine Linie einen Abgas- Turbolader und eine andere Linie eine Expansionsturbine. Die mechanische Leistung der Expansionsturbine kann zum Beispiel mechanisch auf die Antriebswelle des Heckpropellers gekoppelt werden und/oder zur elektrischen Energieerzeugung zum Laden der Batterien oder zum Antrieb der Elektromotoren für die Hubrotoren eingesetzt werden. Die Verteilung des Abgases erfolgt zum Beispiel über eine Klappe. Dadurch wird eine Bedarfssteuerung des Abgasturboladers möglich. Ein sogenanntes Waste Gate zum Abblasen überschüssigen Ladedrucks ist somit nicht erforderlich. Das überschüssige Abgas wird der Expansionsturbine zugeleitet. Dies wird in der Figurenbeschreibung noch genauer erläutert werden.

Alternativ dazu ist auch zur Unterstützung ein wellengekoppelter mechanischer Lader beliebiger Bauart einsetzbar, beispielsweise ein Rootslader, oder Wälzkolbenverdichter, oder ein G-Lader, oder Zentrifugalverdichter.

Eine entsprechende Anordnung für den Motor ist nicht auf Diesel-Rotationskolbenmaschinen beschränkt. Ein Hubkolbenmotor kann ebenfalls betrieben werden. Anstelle einer Kolbenmaschine kann auch eine Mikro-Gasturbine in einer Ausführung als Wellenleistungsmaschine eingesetzt werden. Diese sind sowohl mit Diesel als auch Kerosin betreibbar. Mikro-Gasturbinen sind einfache einwellige Maschinen mit einstufigem Radialkompressor und einstufiger Axialturbine. Im Gegensatz zu Kolbenmotoren ist das Leistungsgewicht unter 0,75 kg/kW anzusiedeln, z.B. bei ca. 0,2 kg/kW oder besser. Der thermodynamische Wirkungsgrad liegt bedingt durch den einstufigen Kompressor bei ca. 10 % eines z.B. 30 kW-Triebwerks. Verbesserungen des Wirkungsgrades sind zum Beispiel möglich durch eine Kompressor-Zwischenkühlung und eine zusätzliche Expansionsturbine.

Eine weitere mögliche Alternative stellen Brennstoffzellen dar. Diese können mit Wasserstoff betrieben werden oder durch eine Vorreformierung von Diesel bzw. Kerosin. Hierbei kann der Einsatz von Festoxid- Brennstoffzellen (SOFC-Solid Oxide Fuel Cell) erforderlich sein. Die Reformierung kann mittels einer unterstöchiometrischen Verbrennung von Diesel bzw. Kerosin zu Wasserstoff und Kohlenmonoxid erfolgen. Das Brenngas H2/CO kann mittels einer SOFC umgesetzt werden.

Der erste, zweite und/oder der dritte Generator kann einen Startergenerator aufweisen, welcher dazu ausgeführt ist, den Motor des Fluggerätes zu beschleunigen (Starter). Die Hubrotoren weisen Propeller auf, welche vollständig durch die elektrisch bereitgestellte Energie betrieben werden können, beispielsweise über Elektromotoren. Die elektrische Energie kann sowohl durch die Generatoren erzeugt als auch durch den Energiespeicher, insbesondere die Batterien, bereitgestellt werden. Eine entsprechende Auslegung dieser Komponenten kann von der Größe des Generators bzw. Startergenerators abhängen. Hierzu kann eine Gewichts- und Leistungsoptimierung vorgenommen werden.

Es kann zwischen verschiedenen Betriebsmodi des Motors und/oder der Generatoren unterschieden werden.

Beispielsweise können der Motor und der Generator mit konstanter Geschwindigkeit betrieben werden. Insbesondere kann der Propeller mit maximaler Umdrehung angetrieben werden. Dabei kann der Betrieb des Generators in einem synchronen oder asynchronen Modus erfolgen.

Ferner können der Motor und der Generator mit variablen Geschwindigkeiten betrieben werden. Insbesondere kann eine maximale Geschwindigkeit mit einer Verbrennungsleistung des Motors korrespondieren, welche für einen Start- oder Schwebeflugzustand angepasst ist. Hierbei kann ein synchroner Betriebsmodus des Generators vorgehsehen sein.

Die elektrische Spannung im Antriebssystem ist vorzugsweise 400V Gleichstrom. Damit kann zum einen das Gewicht von etwaigen elektrischen Versorgungsleitungen als auch von Steuerungs- und Regelungseinheiten (sog. Power Electronics) minimiert werden. Durch das Bereitstellen von Gleichstrom mit 400V kann durch die Hubrotoren eine Leistung von etwa 8 kW für jeden Hubrotor bereitgestellt werden. Vorzugsweise sind vier Hubrotoren am Fluggerät vorgesehen.

Der Motor wird vorzugsweise mit Diesel oder Kerosin betrieben. Die erforderliche maximale Schubkraft für den Vertikalflug oder den Schwebeflug kann bei etwa 150 kg (Maximum Take Off Weight) liegen. Dies entspricht einer Leistung von etwa 35 kW einschließlich elektrischer Verluste. Diese Leistung kann in der Standardkonfiguration des Turboladers bei etwa 6000 Umdrehungen pro Minute erreicht werden. Zusätzliche elektrische und/oder mechanische Energie kann durch ein Turbo Compound System bereitgestellt werden, welches entweder vom Turbolader getrennt ist oder mit dem Turbolader eine Einheit bildet. Der Motor kann ein sogenannter Hirth 2702V-Motor oder ein sogenannter Hirth 3401V-Motor sein. Für eine Zylinderkühlung des Kolbenmotors können NACA Lufteinlässe oder Luftgebläse vorgesehen sein.

### Kurze Beschreibung der Figuren

Nachfolgend wird anhand der beigefügten Zeichnungen näher auf Ausführungsbeispiele der Erfindung eingegangen.
- **Fig. 1**: zeigt eine schematische Darstellung eines senkrechtstartfähigen Fluggerätes gemäß einem Ausführungsbeispiel der Erfindung.
- **Fig. 2**: zeigt eine schematische Darstellung eines Antriebssystems mit einem Abgasturbolader.
- **Fig. 3**: zeigt eine schematische Darstellung eines Antriebssystems mit einem Abgasturbolader und zwei separaten Generatoren.
- **Fig. 4**: zeigt eine schematische Darstellung eines Schubantriebs gemäß einem Ausführungsbeispiel der Erfindung.
- **Fig. 5**: zeigt eine schematische Darstellung eines Antriebssystems mit einem Abgasturbolader und einem Generator.
- **Fig. 6**: zeigt eine schematische Darstellung eines Antriebssystems mit einem Abgasturbolader und zwei separaten Generatoren.
- **Fig. 7**: zeigt eine schematische Darstellung eines Antriebssystems mit einem Abgasturbolader und zwei separaten Turbinen gemäß einem Ausführungsbeispiel der Erfindung.
- **Fig. 8A**: zeigt eine Verteilung eines Abgasstroms aus einem Motor gemäß einem Ausführungsbeispiel der Erfindung.
- **Fig. 8B**: zeigt eine Verteilung eines Abgasstroms aus einem Motor gemäß einem weiteren Ausführungsbeispiel der Erfindung.
- **Fig. 8C**: zeigt eine Verteilung eines Abgasstroms aus einem Motor gemäß einem weiteren Ausführungsbeispiel der Erfindung.

### Detaillierte Beschreibung beispielhafter Ausführungsformen

Die Darstellungen in den Figuren sind schematisch und nicht maßstäblich.

Werden in der folgenden Figurenbeschreibung in verschiedenen Figuren die gleichen Bezugszeichen verwendet, so bezeichnen diese gleiche oder ähnliche Elemente. Gleiche oder ähnliche Elemente können aber auch durch unterschiedliche Bezugszeichen bezeichnet sein.

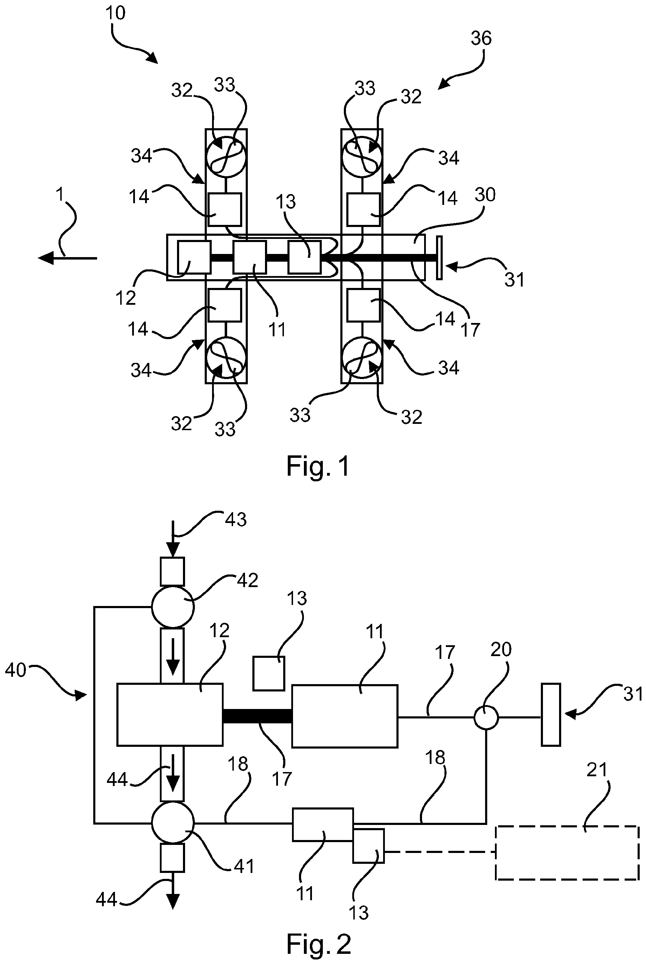

Fig. 1 zeigt eine schematische Darstellung eines senkrechtstartfähigen Fluggeräts 10 in einer Draufsicht. Das senkrechtstartfähige Fluggerät 10 weist einen Motor 12 sowie einen Generator 11 und eine Steuerungseinheit 13 auf, welche beispielsweise in einem Rumpf 30 des senkrechtstartfähigen Fluggeräts 10 angeordnet sind. Ferner ist eine erste Welle 17 vorgesehen, welche mechanische Energie, die durch den Motor 12 bereitgestellt wird, auf einen Schubantrieb 31 überträgt. Der Schubantrieb 31 weist beispielsweise einen Propeller auf. Der Generator 11 ist dazu ausgeführt, die von dem Motor 12 bereitgestellte Wellenenergie in elektrische Energie umzuwandeln und diese elektrische Energie wiederum Elektromotoren 14 bereitzustellen. Auf Basis der den Elektromotoren 14 bereitgestellten elektrische Energie können Hubrotoren 33 eines Hubantriebs 32 angetrieben werden, um eine Auftriebskraft in eine Vertikalrichtung, welche in Fig. 1 aus der Bildebene heraus zeigt, zu erzeugen. Der Schubantrieb 31 ist dazu ausgeführt, eine Antriebskraft in einer Horizontalrichtung 1 bereitzustellen.

Das senkrechtstartfähige Fluggerät 10 weist beispielsweise eine Flügelstruktur 36 auf, welche wiederum zwei Paare von hintereinander an dem Rumpf 30 angebrachten Tragflächen 34 aufweist. In dem in Fig. 1 dargestellten Fall ragen die jeweiligen Tragflächen 34 senkrecht aus dem Rumpf 30 heraus. An den jeweiligen Enden der Tragflächen 34 ist jeweils ein Hubrotor 33 angeordnet, um die für einen Vertikalflug des senkrechtstartfähigen Fluggeräts 10 erforderliche Auftriebskraft bereitzustellen. Durch eine solche Anordnung der Hubrotoren 33 können insbesondere eine gute Stabilität des senkrechtstartfähigen Fluggeräts 10 während des Flugs und somit gute Schwebeflugeigenschaften bereitgestellt werden. Der Motor 12 ist beispielsweise eine Verbrennungskraftmaschine. Der Motor 12 kann beispielsweise ein Kolbenmotor, eine Mikro-Gasturbine oder eine Brennstoffzelle sein. Die Steuerungseinheit 13 ist dazu ausgeführt, die dem Schubantrieb 31 bereitgestellte mechanische Energie und/oder die dem Hubantrieb 32 bereitgestellte elektrische Energie in Abhängigkeit eines Flugzustandes anzupassen.

Die Fig. 2 zeigt eine schematische Darstellung eines Antriebssystems mit einem Abgasturbolader 40, welcher eine Leistungssteigerung des Motors 12 bewirkt. Dabei strömt Luft 43 in einen Verdichter 42 des Abgasturboladers 40 und wird dadurch komprimiert dem Motor 12 zugeführt. Der Arbeitsdruck im Motor 12 kann durch den Abgasturbolader 40 somit erhöht werden. Ein Abgas 44 aus dem Motor 12 gelangt wiederum durch eine erste Turbine 41 des Abgasturboladers 40 hindurch und anschließend zu einem Austritt aus dem senkrechtstartfähigen Fluggerät 10. Die erste Turbine 41 des Abgasturboladers 40 ist beispielsweise mit einer zweiten Welle 18 gekoppelt, so dass die durch den Abgasstrom 44 angetriebene erste Turbine 41 mechanische Wellenenergie an einen Generator 11 überträgt, welcher wiederum elektrische Energie für den Hubantrieb bereitstellt. Dabei wird die elektrische Energie den Elektromotoren 14 der Hubantriebe 32 bereitgestellt. Ferner kann elektrische Energie über einen wiederaufladbaren Energiespeicher 21 bereitgestellt werden bzw. an den Hubantrieb 32 übertragen werden. Der Motor 12, welcher beispielsweise ein Verbrennungsmotor ist, treibt wiederum eine erste Welle 17 an, über die letztendlich der Schubantrieb 31 angetrieben wird. Dabei kann auch auf der ersten Welle 17 ein Generator 11 vorgesehen sein, welcher zumindest einen Teil der von dem Motor 12 bereitgestellten mechanischen Wellenenergie in elektrische Energie umwandelt, um diese elektrische Energie dem Hubantrieb 32 bereitzustellen. Die durch die erste Turbine 41 bereitgestellte mechanische Energie kann durch die Wellenenergie der zweiten Welle 18 über ein Getriebe 20 auf die erste Welle 17 übertragen werden, so dass die mechanische Energie, die durch den Motor 12 bereitgestellt wird, und die mechanische Energie, die durch die erste Turbine 41 bereitgestellt wird, gekoppelt an den Schubantrieb 31 übertragen wird. Somit stehen zwei unabhängig voneinander arbeitende Generatoren 11 sowie zwei sich unabhängig voneinander drehende Wellen 17, 18 zur Verfügung. Dadurch kann eine Einstellung der dem Hubantrieb 32 bereitgestellten elektrischen Energie und der dem Schubantrieb 31 bereitgestellten mechanischen Energie effizient erfolgen.

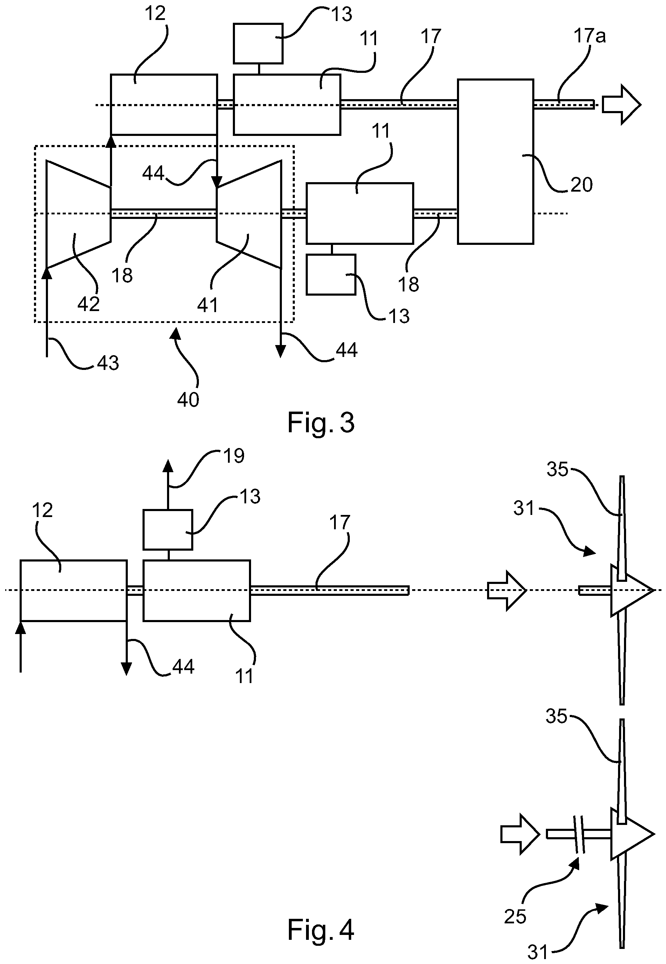

Fig. 3 zeigt eine schematische Darstellung eines Antriebssystems mit dem Abgasturbolader 40, wobei die erste Turbine 41 die zweite Welle 18 antreibt, um damit mechanische Energie für den in Fig. 3 nicht dargestellten Schubantrieb 31 zur Verfügung zu stellen. Ferner treibt der Motor 12, welcher beispielsweise ein Verbrennungsmotor ist, die erste Welle 17 an und stellt somit ebenfalls mechanische Energie für den Schubantrieb 31 zur Verfügung. Die Wellenleistungsenergie der ersten Welle 17 sowie der zweiten Welle 18 können durch ein Getriebe 20 miteinander gekoppelt werden, so dass die von der ersten Turbine 41 bereitgestellte mechanische Energie und die von dem Motor 12 bereitgestellte mechanische Energie gleichzeitig an den Schubantrieb 31 übertragen werden können. Die gekoppelte mechanische Energie kann dabei über eine weitere separate Welle 17a an den Schubantrieb 31 übertragen werden. Dabei ist die weitere separate Welle 17a beispielsweise auf derselben Achse wie die erste Welle 17 angeordnet oder sie bildet einen Teil der ersten Welle 17.

Auf der zweiten Welle 18 ist ferner der Verdichter 42 angeordnet, welcher einen Luftstrom 43 vor Eintritt in den Motor 12 verdichtet. Dadurch kann ein höherer Arbeitsdruck im Motor 12 bereitgestellt werden, was eine Leistungssteigerung bewirkt. Der Abgasturbolader 40 wird somit beispielsweise durch die erste Turbine 41, die zweite Welle 18 und den Verdichter 42 sowie die jeweiligen Ein- und Austrittsvorrichtungen der Luft- und Abgasströme gebildet. Insbesondere wird der ersten Turbine 41 der Abgasstrom 44 von dem Verbrennungsmotor 12 zugeführt, welcher somit die erste Turbine 41 antreibt.

Durch einen auf der ersten Welle 17 angeordneten Generator 11 kann die vom Motor 12 bereitgestellte mechanische Energie zumindest teilweise in elektrische Energie umgewandelt werden, welche anschließend den jeweiligen Elektromotoren 14 des Hubantriebs 32 bereitgestellt wird. Über die Steuerungseinheit 13 kann die dem Schubantrieb 31 bereitgestellte mechanische Wellenleistungsenergie auf die dem Hubantrieb 32 bereitgestellte elektrische Energie abgestimmt werden. Auf der zweiten Welle 18 kann ferner ein weiterer Generator 11 vorgesehen sein, welcher beispielsweise als erster Generator 11 bezeichnet wird. Der auf der ersten Welle 17 angeordnete Generator 11 wird beispielsweise als zweiter Generator 11 bezeichnet.

Jedenfalls kann durch den ersten Generator 11, welcher auf der zweiten Welle 18 angeordnet ist, zumindest ein Anteil der von der ersten Turbine 41 bereitgestellten mechanischen Energie, das heißt Wellenleistungsenergie, in elektrische Energie umgewandelt werden. Auch hier kann die Steuerungseinheit 13 den Anteil der an den Schubantrieb 31 abgegebenen mechanischen Energie und die an den Hubantrieb 32 abgegebene elektrische Energie angepasst werden. Somit kann die dem Hubantrieb 32 bereitgestellte elektrische Energie über zwei separate Generatoren 11, nämlich den ersten Generator 11 und den zweiten Generator 11, bereitgestellt werden.

Fig. 4 zeigt eine schematische Darstellung eines Ausschnittes des Antriebssystems, insbesondere die Übertragung der Wellenleistungsenergie bzw. Wellenenergie auf den Schubantrieb 31. Dabei kann an der ersten Welle 17 eine Kupplung 25 vorgesehen sein, welche zwischen dem Wellenantrieb, das heißt dem Motor 12, und dem Schubantrieb 31 angeordnet ist. Durch ein Einkuppeln bzw. Auskuppeln der Kupplung 25 kann eine Kraftübertragung von der ersten Welle 17 auf den Schubantrieb 31 bereitgestellt oder unterbunden werden. Ferner zeigt Fig. 4 den Generator 11, welcher elektrische Energie aus der Wellenleistungsenergie der Welle 17 bezieht und an Elektromotoren 14 des Hubantriebs 32 überträgt. Die Übertragung der elektrischen Energie vom Generator 11 kann dabei beispielsweise über die Steuerungseinheit 13 geregelt werden, wobei Steuerungssignale 19 an die jeweiligen Elektromotoren 14 der Hubantriebe 32 übertragen werden. Somit kann eine bedarfsgerechte Anpassung der jeweils zur Verfügung gestellten elektrischen Energie in Abhängigkeit des Flugzustandes des senkrechtstartfähigen Fluggerätes 10 erfolgen.

Der Schubantrieb 31 weist ferner einen Propeller 35 auf, welcher durch eine Drehbewegung einen Impuls für das senkrechtstartfähige Fluggerät 10 erzeugt und somit einen Antrieb des senkrechtstartfähigen Fluggeräts 10 in die Horizontalrichtung 1 sicherstellt.

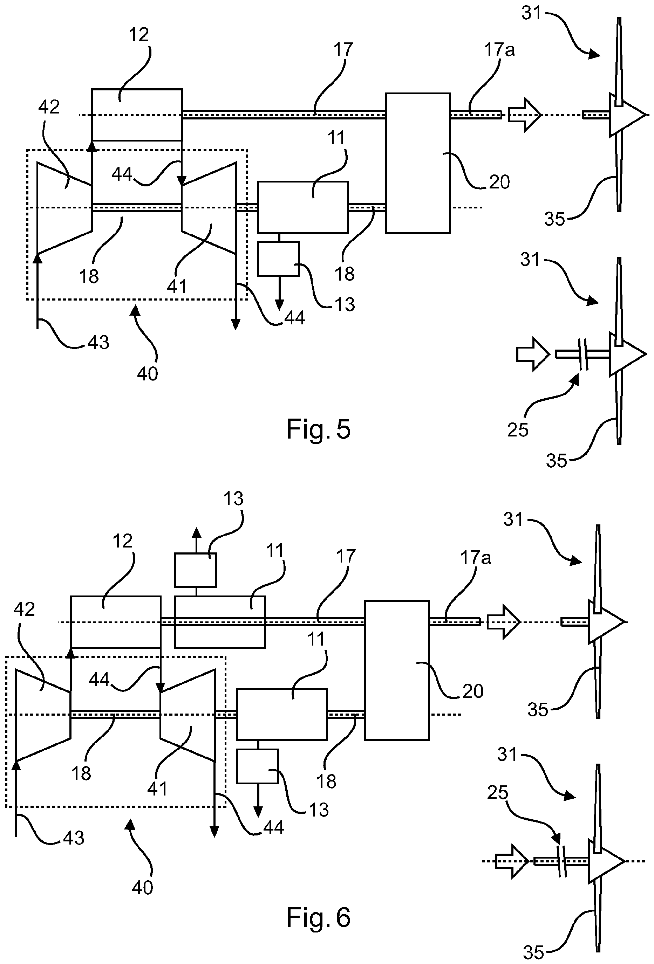

Fig. 5 zeigt eine schematische Darstellung eines weiteren Beispiels des Antriebssystems für das senkrechtstartfähige Fluggerät 10, wobei das Antriebssystem lediglich auf der zweiten Welle 18 einen Generator 11 aufweist und die erste Welle 17 keinen Generator 11 aufweist. Dabei wird die von dem Motor 12 bereitgestellte mechanische Energie, insbesondere die Wellenleistungsenergie der Welle 17, vollständig an den Schubantrieb 31 übertragen. Lediglich die von der ersten Turbine 41 bereitgestellte mechanische Energie kann durch den ersten Generator 11, welcher auf der zweiten Welle 18 angeordnet ist, in elektrische Energie umgewandelt werden. Die erste Turbine 41, welche ein Teil des Abgasturboladers 40 ist, wird durch den Abgasstrom 44 aus dem Verbrennungsmotor 12 angetrieben. Dabei wird das Abgas bei Durchlaufen der ersten Turbine 41 entspannt.

Das in Fig. 5 dargestellte Antriebssystem wird beispielsweise auch als ein sogenanntes einflutiges System bezeichnet, da hier lediglich die erste Turbine 41 durch den Abgasstrom 44 angetrieben wird. Jedes der hier beschriebenen Beispiele welches lediglich eine, das heißt die erste Turbine 41 aufweist, kann als einflutiges System bezeichnet werden.

Fig. 6 zeigt eine schematische Darstellung des Antriebssystems für das senkrechtstartfähige Fluggerät 10, welches ebenfalls als einflutiges System ausgestaltet ist. Insbesondere wird lediglich die erste Turbine 41 durch den Abgasstrom 44 angetrieben. Dabei ist jedoch ein zweiter Generator 11 auf der ersten Welle 17 angeordnet und stellt neben dem ersten Generator 11 auf der zweiten Welle 18 ein zusätzliches Medium zum Bereitstellen von elektrischer Energie für den Hubantrieb 32 zur Verfügung. Die umzuwandelnde mechanische Energie in elektrische Energie durch die Generatoren 11 kann dabei durch die Steuerungseinheit 13 eingestellt und/oder vorgegebenen werden. Insbesondere kann eine Anpassung der von der ersten Turbine 41 bzw. der von dem Motor 12 bereitgestellten mechanischen Energie zu der von den Generatoren 11 umgewandelten elektrischen Energie eingestellt werden. Diese Einstellung bzw. Anpassung der bereitgestellten mechanischen Energie und der bereitgestellten elektrischen Energie kann eine Verbesserung der Anpassung des senkrechtstartfähigen Fluggeräts 10 an verschiedene Flugzustände bewirken.

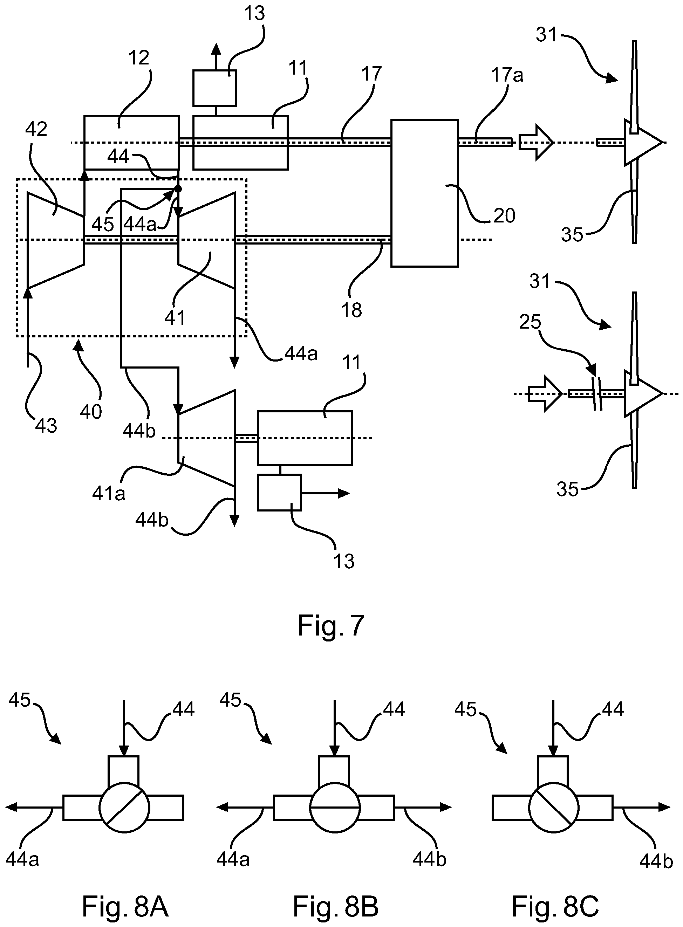

In Fig. 7 ist ein sogenanntes zweiflutiges Antriebssystem des senkrechtstartfähigen Fluggerätes 10 dargestellt. Insbesondere wird der Abgasstrom 44, welcher aus dem Motor 12 austritt, in einen der ersten Turbine 41 zuzuführenden ersten Abgasanteil 44a und einen einer zweiten Turbine 41a zuzuführenden zweiten Abgasanteil 44b aufgeteilt. Für diese Aufteilung ist eine Verteilereinheit 45 in Form einer Klappe oder eines Ventils nach dem Austritt des Abgasstroms 44 aus dem Verbrennungsmotor 12 vorgesehen. Die zweite Turbine 41a treibt beispielsweise ebenfalls eine Welle an, auf welcher wiederum ein dritter Generator 11 angeordnet ist. Dieser dritte Generator 11 stellt beispielsweise elektrische Energie für den Hubantrieb 32 bereit. Es kann vorgesehen sein, dass der dritte Generator 11 dazu ausgeführt ist, die gesamte durch die zweite Turbine 41a bereitgestellte mechanische Energie in elektrische Energie umzuwandeln und damit die Elektromotoren 14 des Hubantriebs 32 zu versorgen. Hingegen ist auf der zweiten Welle 18, auf welcher auch die erste Turbine 41 angeordnet ist, kein Generator 11 angeordnet, so dass die gesamte von der ersten Turbine 41 bereitgestellte mechanische Energie dem Schubantrieb 31 bereitgestellt wird. Lediglich auf der ersten Welle 17 ist noch ein weiterer Generator 11 vorgesehen, welcher ebenfalls elektrische Energie für den Hubantrieb 32 bereitstellen kann.

Durch die Aufteilung des Abgasstroms 44 in einen ersten Abgasanteil 44a und einen zweiten Abgasanteil 44b, welche jeweils zwei verschiedene Turbinen 41, 41a durchströmen und damit antreiben, kann erreicht werden, dass die mechanische Energie für den Schubantrieb 31 völlig unabhängig von der bereitgestellten elektrischen Energie für den Hubantrieb 32 eingestellt werden kann. Diese Einstellung kann insbesondere durch die Verteilereinheit 45 erfolgen, die den ersten Abgasanteil 44a und den zweiten Abgasanteil 44b steuert. Insbesondere kann ein Verhältnis zwischen dem ersten Abgasanteil 44a und dem zweiten Abgasanteil 44b, beispielsweise durch die Steuerungseinheit 13, vorgegeben bzw. eingestellt werden.

Fig. 8A zeigt eine schematische Ansicht der Verteilereinheit 45 für den Fall, dass der gesamte vom Motor 12 kommende Abgasstrom 44 der ersten Turbine 41 zugeführt wird. Dabei wird der erste Abgasanteil 44a, welcher dem Abgasanteil des Abgasstroms 44 entspricht, vollständig zur ersten Turbine 41 geleitet.

Fig. 8B zeigt die Verteilereinheit 45 für den Fall, dass der Abgasstrom 44 zu gleichen oder unterschiedlichen Anteilen 44a, 44b zur ersten Turbine 41 bzw. zur zweiten Turbine 41a geleitet wird.

Fig. 8C zeigt die Verteilereinheit 45 für den Fall, dass der gesamte vom Motor 12 kommende Abgasstrom 44 der zweiten Turbine 41a zugeführt wird. Dabei entspricht der zweite Abgasanteil 44b, welcher der zweiten Turbine 41a zugeführt wird, dem vom Motor 12 kommenden Anteil des Abgasstroms 44.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Senkrechtstartfähiges Fluggerät (10), aufweisend:
einen Schubantrieb (31) zum Erzeugen einer in eine Horizontalrichtung (1) wirkenden Antriebskraft;
einen Hubantrieb (32) zum Erzeugen einer in eine Vertikalrichtung wirkenden Auftriebskraft;
einen Motor (12) zum Bereitstellen von mechanischer Energie für den Schubantrieb (31);
einen ersten Generator (11) zum Bereitstellen von elektrischer Energie für den Hubantrieb (32);
einen Abgasturbolader (40) für den Motor (12) mit einer von einem Abgasstrom (44) des Motors (12) angetriebenen ersten Turbine (41), die dazu ausgeführt ist, mechanische Energie für den Schubantrieb (31) bereitzustellen;
eine zweite Turbine (41a) zum Bereitstellen mechanischer Energie für einen dritten Generator (11), wobei der dritte Generator (11) dazu ausgeführt ist, elektrische Energie für den Hubantrieb (32) bereitzustellen;
wobei ein Antrieb der zweiten Turbine (41a) durch den Abgasstrom (44, 44b) des Motors (12) erfolgt;
eine Verteilereinheit (45), welche ausgeführt ist, ein Aufteilen des Abgasstroms (44) des Motors (12) in einen der ersten Turbine (41) zuzuführenden ersten Abgasanteil (44a) und einen der zweiten Turbine (41a) zuzuführenden zweiten Abgasanteil (44b) so zu steuern, dass ein Verhältnis zwischen dem ersten Abgasanteil und dem zweiten Abgasanteil vorgegeben oder eingestellt wird.

2. Senkrechtstartfähiges Fluggerät nach Anspruch 1,
wobei der erste Generator (11) dazu ausgeführt ist, die elektrische Energie für den Hubantrieb (32) unter Verwendung der von der ersten Turbine (41) bereitgestellten mechanischen Energie bereitzustellen.

3. Senkrechtstartfähiges Fluggerät nach einem der vorhergehenden Ansprüche, aufweisend:
einen zweiten Generator (11), der dazu ausgeführt ist, zumindest einen Anteil der von dem Motor (12) bereitgestellten mechanischen Energie in elektrische Energie umzuwandeln und diese elektrische Energie dem Hubantrieb (32) bereitzustellen.

4. Senkrechtstartfähiges Fluggerät nach einem der vorhergehenden Ansprüche, aufweisend:
ein Getriebe (20), welches dazu ausgeführt ist, die von dem Motor (12) bereitgestellte mechanische Energie und/oder die von der ersten Turbine (41) bereitgestellte mechanische Energie an den Schubantrieb (31) zu übertragen.

5. Senkrechtstartfähiges Fluggerät nach einem der vorhergehenden Ansprüche, aufweisend: eine Steuerungseinheit (13), welche dazu ausgeführt ist, den ersten Abgasanteil (44a) und den zweiten Abgasanteil (44b) einzustellen, um somit die durch die erste Turbine (41) und die zweite Turbine (41a) bereitgestellte mechanische Energie anzupassen.

6. Senkrechtstartfähiges Fluggerät nach Anspruch 5, wobei die Steuerungseinheit (13) dazu ausgeführt ist, einen Anteil der bereitgestellten mechanischen Energie und einen Anteil der bereitgestellten elektrischen Energie in Abhängigkeit eines Flugzustandes anzupassen.

7. Senkrechtstartfähiges Fluggerät nach einem der vorhergehenden Ansprüche, aufweisend: wobei der Abgasturbolader (40) einen von der ersten Turbine (41) angetriebenen Verdichter (42) aufweist, der dazu ausgeführt ist, den Arbeitsdruck in dem Motor (12) zu erhöhen.

8. Senkrechtstartfähiges Fluggerät nach einem der vorhergehenden Ansprüche, wobei der Schubantrieb (31) einen Propeller (35) aufweist, und wobei der Schubantrieb (31) dazu ausgeführt ist, die bereitgestellte mechanische Energie über eine Welle (17, 18) an den Propeller (35) zu übertragen; und wobei die Welle (17, 18) zur Übertragung der mechanischen Energie auf den Propeller (35) eine Kupplung (25) aufweist.

9. Senkrechtstartfähiges Fluggerät nach einem der vorhergehenden Ansprüche, aufweisend: eine Flügelstruktur (36), die dazu ausgeführt ist, bei einer Horizontalbewegung des Fluggerätes (10) eine Auftriebskraft für das Fluggerät (10) zu erzeugen.

10. Senkrechtstartfähiges Fluggerät nach Anspruch 9, wobei die Flügelstruktur (36) zwei in Horizontalrichtung (1) hintereinander angeordnete Paare von von einem Rumpf (30) des Fluggerätes (10) abragenden Tragflächen (34) aufweist.

11. Senkrechtstartfähiges Fluggerät nach Anspruch 10,
wobei der Hubantrieb (32) zumindest zwei Hubrotoren (33) aufweist, welche jeweils an einem Ende der Tragflächen (34) angeordnet sind.

12. Senkrechtstartfähiges Fluggerät nach einem der vorhergehenden Ansprüche, aufweisend: einen wiederaufladbaren Energiespeicher (21) zur Versorgung der Hubrotoren (33) mit elektrischer Energie; wobei die Steuerungseinheit (13) dazu ausgeführt ist, ein Verhältnis der vom ersten Generator (11) bereitgestellten elektrischen Energie zu der vom Energiespeicher (21) bereitgestellten elektrischen Energie einzustellen.

## Claims

1. Aircraft (10) with vertical takeoff capability, having:
a thrust drive (31) for generating a drive force acting in a horizontal direction (1),
a lift drive (32) for generating a lift force acting in a vertical direction;
an engine (12) for providing mechanical energy for the thrust drive (31),
a first generator (11) for providing electrical energy for the lift drive (32);
an exhaust-gas turbocharger (40) for the engine (12), having a first turbine (41) which is driven by an exhaust-gas stream (44) of the engine (12) and which is designed to provide mechanical energy for the thrust drive (31);
a second turbine (41a) for providing mechanical energy for a third generator (11), wherein the third generator (11) is designed to provide electrical energy for the lift drive (32);
wherein drive of the second turbine (41a) is realized by means of the exhaust-gas stream (44, 44b) of the engine (12);
a distributor unit (45) which is designed to control a splitting of the exhaust-gas stream (44) of the engine (12) into a first exhaust gas fraction (44a) to be fed to the first turbine (41) and a second exhaust-gas fraction (44b) to be fed to the second turbine (41a) such that a ratio between the first exhaust-gas fraction and the second exhaust-gas fraction is predefined or adjusted.

2. Aircraft with vertical takeoff capability according to Claim 1,
wherein the first generator (11) is designed to provide electrical energy for the lift drive (32) using the mechanical energy provided by the first turbine (41).

3. Aircraft with vertical takeoff capability according to any of the preceding claims, having:
a second generator (11) which is designed to convert at least a fraction of the mechanical energy provided by the engine (12) into electrical energy and provide said electrical energy to the lift drive (32).

4. Aircraft with vertical takeoff capability according to any of the preceding claims, having:
a transmission (20) which is designed to transmit the mechanical energy provided by the engine (12) and/or the mechanical energy provided by the first turbine (41) to the thrust drive (31).

5. Aircraft with vertical takeoff capability according to any of the preceding claims, having:
a control unit (13) which is designed to adjust the first exhaust-gas fraction (44a) and the second exhaust-gas fraction (44b) in order to thus adapt the mechanical energy provided by the first turbine (41) and the second turbine (41a).

6. Aircraft with vertical takeoff capability according to Claim 5, wherein the control unit (13) is designed to adapt a fraction of the provided mechanical energy and a fraction of the provided electrical energy in a manner dependent on a flight state.

7. Aircraft with vertical takeoff capability according to any of the preceding claims, having:
wherein the exhaust-gas turbocharger (40) has a compressor (42) which is driven by the first turbine (41) and which is designed to increase the working pressure in the engine (12).

8. Aircraft with vertical takeoff capability according to any of the preceding claims, wherein the thrust drive (31) has a propeller (35), and wherein the thrust drive (31) is designed to transmit the provided mechanical energy via a shaft (17, 18) to the propeller (35); and wherein the shaft (17, 18) has a coupling (25) for transmitting the mechanical energy to the propeller (35) .

9. Aircraft with vertical takeoff capability according to any of the preceding claims, having:
a wing structure (36) which is designed to generate a lift force for the aircraft (10) during a horizontal movement of the aircraft (10).

10. Aircraft with vertical takeoff capability according to Claim 9, wherein the wing structure (36) has two pairs, arranged one behind the other in a horizontal direction (1), of aerofoils (34) which project from a fuselage (30) of the aircraft (10).

11. Aircraft with vertical takeoff capability according to Claim 10,
wherein the lift drive (32) has at least two lift rotors (33) which are arranged in each case at an end of the aerofoils (34).

12. Aircraft with vertical takeoff capability according to any of the preceding claims, having:
a rechargeable energy store (21) for the supply of electrical energy to the lift rotors (33); wherein the control unit (13) is designed to adjust a ratio of the electrical energy provided by the first generator (11) to the electrical energy provided by the energy store (21) .

## Revendications

1. Engin volant à décollage vertical (10) comprenant :
un entraînement de poussée (31) destiné à générer une force d'entraînement agissant dans une direction horizontale (1) ;
un entraînement de sustentation (32) destiné à générer une force de poussée verticale agissant dans une direction verticale ;
un moteur (12) destiné à fournir de l'énergie mécanique à l'entraînement de poussée (31) ;
un premier générateur (11) destiné à fournir de l'énergie électrique à l'entraînement de sustentation (32) ;
un turbocompresseur à gaz d'échappement (40) destiné au moteur (12) et comprenant une première turbine (41) entraînée par un flux de gaz d'échappement (44) du moteur (12) et conçue pour fournir de l'énergie mécanique à l'entraînement de poussée (31) ;
une deuxième turbine (41a) destinée à fournir de l'énergie mécanique à un troisième générateur (11), le troisième générateur (11) étant adapté pour fournir de l'énergie électrique à l'entraînement de sustentation (32) ;
un entraînement de la deuxième turbine (41a) étant effectué par le flux de gaz d'échappement (44, 44b) du moteur (12) ;
une unité de distribution (45) conçue pour commander une division du flux de gaz d'échappement (44) du moteur (12) en une première partie de gaz d'échappement (44a) destinée à alimenter la première turbine (41) et une deuxième partie de gaz d'échappement (44b) destiné à alimenter la deuxième turbine (41a) de manière à prédéfinir ou régler un rapport entre la première partie de gaz d'échappement et la deuxième partie de gaz d'échappement.

2. Engin volant à décollage vertical selon la revendication 1,
le premier générateur (11) étant conçu pour fournir de l'énergie électrique à l'entraînement de sustentation (32) en utilisant de l'énergie mécanique fournie par la première turbine (41).

3. Engin volant à décollage vertical selon l'une des revendications précédentes, comprenant :
un deuxième générateur (11) conçu pour convertir au moins une partie de l'énergie mécanique fournie par le moteur (12) en énergie électrique et pour transmettre cette énergie électrique à l'entraînement de sustentation (32).

4. Engin volant à décollage vertical selon l'une des revendications précédentes, comprenant :
une transmission (20) conçue pour fournir de l'énergie mécanique fournie par le moteur (12) et/ou l'énergie mécanique fournie par la première turbine (41) à l'entraînement de poussée (31).

5. Engin volant à décollage vertical selon l'une des revendications précédentes, comprenant :
une unité de commande (13) conçue pour régler la première partie de gaz d'échappement (44a) et la deuxième partie de gaz d'échappement (44b) de manière à adapter de l'énergie mécanique fournie par la première turbine (41) et la deuxième turbine (41a).

6. Engin volant à décollage vertical selon la revendication 5, l'unité de commande (13) étant conçu pour adapter une partie de l'énergie mécanique fournie et une partie de l'énergie électrique fournie en fonction d'une condition de vol.

7. Engin volant à décollage vertical selon l'une des revendications précédentes ayant :
le turbocompresseur à gaz d'échappement (40) comprenant un compresseur (42) entraîné par la première turbine (41) et conçu pour augmenter la pression de travail dans le moteur (12).

8. Engin volant à décollage vertical selon l'une des revendications précédentes, l'entraînement de poussée (31) comportant une hélice (35), et l'entraînement de poussée (31) étant conçu pour transférer l'énergie mécanique fournie à l'hélice (35) par le biais d'un arbre (17, 18) ; et l'arbre (17, 18) comportant un accouplement (25) destiné à transférer de l'énergie mécanique à l'hélice (35).

9. Engin volant à décollage vertical selon l'une des revendications précédentes, comprenant :
une structure d'aile (36) conçue pour générer une force de poussée verticale destinée à l'engin volant (10) lors du mouvement horizontal de l'engin volant (10) .

10. Engin volant à décollage vertical selon la revendication 9, la structure d'aile (36) comprenant deux paires de surfaces portantes (34) qui font saillie d'un fuselage (30) de l'engin volant (10), lesquelles paires sont disposées l'une derrière l'autre dans la direction horizontale (1).

11. Engin volant à décollage vertical selon la revendication 10,
l'entraînement de sustentation (32) comportant au moins deux rotors de sustentation (33) qui sont chacun disposés à une extrémité des surfaces portantes (34).

12. Engin volant à décollage vertical selon l'une des revendications précédentes, comprenant :
un accumulateur d'énergie rechargeable (21) destiné à alimenter les rotors de sustentation (33) en énergie électrique ; l'unité de commande (13) étant conçue pour régler un rapport entre l'énergie électrique fournie par le premier générateur (11) et l'énergie électrique fournie par l'accumulateur d'énergie (21).
